# EUROPÄISCHE PATENTSCHRIFT

(11) **EP 2 964 797 B1**
(45) Veröffentlichungstag und Bekanntmachung des Hinweises auf die Patenterteilung: **01.02.2017**
(21) Anmeldenummer: 13741971.9
(22) Anmeldetag: 05.07.2013
(51) Int. Cl.: C22C 9/04, C22F 1/08, E03C 1/00

(54) **KUPFER-ZINK-LEGIERUNG FÜR EINE SANITÄRARMATUR SOWIE VERFAHREN ZU DEREN HERSTELLUNG**
COPPER-ZINC ALLOY FOR A PLUMBING FITTING AND METHOD FOR THE PRODUCTION THEREOF
ALLIAGE CUIVRE-ZINC POUR UNE ROBINETTERIE SANITAIRE, ET PROCÉDÉ DE FABRICATION DE LADITE ROBINETTERIE

(30) Priorität: 07.03.2013 DE 102013003817
(43) Veröffentlichungstag der Anmeldung: 13.01.2016
(73) Patentinhaber: Grohe AG, 58675 Hemer (DE)
(72) Erfinder: SCHRÖDER, Thomas, 58706 Menden (DE); PETZOLDT, Olaf, 38855 Wernigerode (DE)
(86) Internationale Anmeldenummer: PCT/EP2013/001976
(87) Internationale Veröffentlichungsnummer: WO 2014/135180

(56) Entgegenhaltungen:
- EP-A1- 1 273 671
- EP-A1- 1 439 238
- EP-A2- 0 663 452
- JP-A- 2001 294 956
- US-A- 5 445 687
- US-B1- 6 599 378

## Beschreibung

Die vorliegende Erfindung betrifft eine Kupfer-Zink-Legierung (bzw. Messing-Legierung) für eine Sanitärarmatur sowie ein Verfahren zu deren Herstellung. Insbesondere handelt es sich um eine Gusslegierung, mit der Wasser führende und/oder mit Wasser in Kontakt kommende Bauteile einer Sanitärarmatur gefertigt werden können.

Bei der Herstellung von Bauteilen einer Sanitärarmatur sind unterschiedlichste Anforderungen zu berücksichtigen. Generell gilt, dass der Werkstoff für die Herstellung der teilweise sehr komplex gestalteten Bauteile einer Sanitärarmatur geeignet sein soll. Dies betrifft einerseits die gute Gießbarkeit bzw. Entformbarkeit, aber auch die Zerspanbarkeit für den Fall, dass diese Bauteile durch spanende Fertigungsverfahren nachbearbeitet werden müssen. Selbstverständlich spielen hierbei auch Kostenaspekte eine wesentliche Rolle.

Darüber hinaus ist zu berücksichtigen, dass diese Bauteile ebenfalls zur Trinkwasserförderung eingesetzt werden. Hierfür bestehen weltweit unterschiedliche gesetzliche Anforderungen, die einen dauerhaften Einsatz solcher Bauteile ohne Kontaminierung des Trinkwassers sicherstellen sollen.

Eine besonders wichtige Anforderung ist hierbei die Entzinkungsbeständigkeit, die insbesondere nach einem Materialtest gemäß ISO 6509 bestimmt werden kann. Dabei wird der Werkstoff für eine Dauer von 24 Stunden in ein 75 °C heißes Kupfer-Chlorid-Bad (CuCl₂) mit einer Konzentration von 12,7 Gramm CuCl₂ auf einen Liter Wasser (H₂O) getaucht. Bestimmt wird dann, bis zu welcher Tiefe Zinkionen ausgetragen wurden. Je geringer diese Entzinkungstiefe ist, umso besser ist dieser Werkstoff für die Trinkwasserförderung geeignet.

Eine weitere Anforderung ist, dass die unterschiedlichen Bauteile einer Sanitärarmatur möglichst zusammen recycelt werden können. Zu diesem Zweck wird als vorteilhaft angesehen, dass eine solche Kupfer-Zink-Legierung einen möglichst geringen Anteil von Silizium (Si) aufweist. Damit kann sichergestellt werden, dass die Legierung im Standardherstellungsprozess mit den Standardmessinglegierungen vermischt und somit recycelt werden kann.

Daraus kann entnommen werden, dass bei der Auswahl eines geeigneten Werkstoffs für Bauteile einer Sanitärarmatur eine Vielzahl unterschiedlicher Zielvorgaben vorliegen, die teilweise auch in Konflikt zueinander stehen.

Hiervon ausgehend ist es Aufgabe der vorliegenden Erfindung, eine Kupfer-Zink-Legierung anzugeben, die die eingangs geschilderten Probleme zumindest teilweise löst. Insbesondere soll eine Kupfer-Zink-Legierung zur Verwendung für eine Sanitärarmatur geeignet sein. Darüber hinaus soll auch eine vorteilhafte Sanitärarmatur sowie ein Verfahren zu deren Herstellung angegeben werden.

Diese Aufgaben werden gelöst mit einer Kupfer-Zink-Legierung gemäß den Merkmalen des Patentanspruchs 1. Weitere vorteilhafte Ausgestaltungen der Erfindung sind in den abhängigen Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung erläutert diese Merkmale und gibt weitere Ausführungsbeispiele der Erfindung an.

Erfindungsgemäß besteht die Kupfer-Zink-Legierung aus:
- 63,5 bis 63,8 Gew.-% Kupfer (Cu),
- 35,2 bis 35,6 Gew.-% Zink (Zn),
- 0,17 bis 0,20 Gew.-% Blei (Pb),
- 0,32 bis 0,40 Gew.-% Aluminium (Al),
- 0,11 bis 0,13 Gew.- % Arsen (As),
- 0,16 bis 0,20 Gew.-% Eisen (Fe),
- 0,0 bis 0,20 Gew.-% Zinn (Sn),
- 0,0 bis 0,02 Gew.-% Mangan (Mn),
sowie Restbestandteile bis maximal je 0,02 Gew.-%.

Bei dieser Kupfer-Zink-Legierung ist hervorzuheben, dass der angegebene Bleigehalt (Pb) sehr klein ist. Weiterhin ist darauf hinzuweisen, dass der Kupfergehalt (Cu) ebenfalls gegenüber bekannten Legierungen niedrig ist. Ebenso ist herauszustellen, dass die Kupfer-Zink-Legierung nur einen (vernachlässigbar) kleinen Gehalt an Silizium (Si) hat. Es hat sich überraschend herausgestellt, dass diese Kupfer-Zink-Legierung aufgrund der hier gewählten Zusammensetzung einerseits kostengünstiger ist und zudem eine hervorragende Entzinkungsbeständigkeit aufweist, nämlich mit einer Entzinkungstiefe von weniger als 200 µm [Mikrometer], insbesondere sogar weniger als 100 µm.

Bei der hier angegebenen Kupfer-Zink-Legierung handelt es sich insbesondere um eine sogenannte Gusslegierung.

Bezüglich des Blei-Anteils (Pb) ist anzumerken, dass dieser eine ausreichende Verbesserung der Spanbarkeit der Gusslegierung bewirkt. Weiterhin ist bekannt, dass Blei eine positive Wirkung auf die Entzinkungsbeständigkeit hat. Es wurde festgestellt, dass in dem angegebenen Bereich eine hervorzuhebende kornfeinende Wirkung vorliegt. Die Kornfeinung bewirkt, dass der im Messing enthaltene Anteil des weniger säureresistenten Beta-Messings fein und inselförmig-isoliert in der entzinkungsbeständigen Alpha-Messing-Matrix verteilt wird. Bevorzugt ist, dass der Blei-Anteil in einem Teilbereich liegt, der nahe der Obergrenze liegt, also beispielsweise in einem Bereich von 0,19 bis 0,2 Gew.-%.

Das Aluminium (Al) erhöht insbesondere durch Mischkristallhärtung die Festigkeit der Alpha-Phase und Beta-Phase, ohne wesentlich das Warmformvermögen zu beeinflussen. Ferner verbessert es den Widerstand gegen Erosionskorrosion sowie die Anlauf- und Witterungsbeständigkeit. Außerdem erhöht Aluminium die Festigkeit und speziell bei Gusserzeugnissen eine hohe Oberflächenqualität zu erreichen. Aluminium zeigte in Versuchsreihen eine negative Wirkung auf die Eigenschaft der Entzinkungsbeständigkeit. Der relativ geringe Aluminiumanteil bewirkt eine flächenanteilmäßig geringere Ausbildung des weniger säureresistenten Beta-Messings. Der so reduzierte Beta-Messing-Mischkristallanteil wird besser inselförmig-isoliert in der entzinkungsbeständigen Alpha-Messing-Matrix verteilt. Oberhalb der angegebenen Obergrenze kam es zu einer deutlichen Verschlechterung der Entzinkungsbeständigkeitswerte. Falls die angegebene Untergrenze unterschritten wird, werden die physikalisch und wirtschaftlich positiven Wirkungen des Aluminiums nicht mehr umfassend genutzt.

Arsen (As) fördert hier in den angegebenen, geringen Mengen, dass die Kupfer-Zink-Legierung mit der einheitlichen (Alpha-Phase) nicht wesentlich zinkt. Arsen hatte in Versuchsreihen auch eine positive Wirkung auf das Merkmal Entzinkungsbeständigkeit. Der gegenüber dem herkömmlichen Standartmessing erhöhte Arsen-Anteil bewirkt eine flächenanteilmäßig geringere Ausbildung des weniger säureresistenten Beta-Messings. Eine Erklärung für die positiven Auswirkungen von Arsen auf die Entzinkungsbeständigkeit kann seine Wirkung als Inhibitor gegen den chemischen Angriff der beim Entzinkungstest verwendeten Säuren sein. Die Obergrenze von 0,13 Gew.-% wurde insbesondere auch unter Berücksichtigung der eingangs genannten Zielparameter gewählt. Die Untergrenze von 0,11 Gew.-% ist das Ergebnis von Versuchsreihen. Unterhalb dieser Grenze gab es eine deutliche Verschlechterung der Entzinkungsbeständigkeit. Bevorzugt ist, dass der Arsen-Anteil in einem Teilbereich liegt, der nahe der Obergrenze liegt, also beispielsweise in einem Bereich von 0,12 bis 0,13 Gew.-%.

Der vorgeschlagene Eisengehalt (Fe) unterstützt insbesondere eine Kornfeinung durch primär ausgeschiedene Eisenkristalle und verbessert damit die mechanischen Eigenschaften der Bauteile. Eisen hatte in Versuchsreihen eine positive Wirkung auf das Merkmal Entzinkungsbeständigkeit. Dies kann durch die nachgewiesene kornfeinende Wirkung erklärt werden. Die Kornfeinung bewirkt, dass der im Messing enthaltene Eisen-Anteil des weniger säureresistenten Beta-Messings fein und inselförmig- isoliert in der entzinkungsbeständigen Alpha-Messing-Matrix verteilt wird. Die Obergrenze von 0,2 Gew.-% wurde festgelegt, weil höhere Eisenwerte die Bildung von Harteinschlüssen hervorrufen können. Die Erklärung hierfür liegt im relativ hohen Schmelzpunkt des Eisens. Harteinschlüsse führen zu Oberflächenfehlern, die bei Aufputz-Armaturen nicht akzeptiert werden. Die Untergrenze von 0,16 Gew.-% ist das Ergebnis von Versuchsreihen. Unterhalb dieser Grenze gab es eine deutliche Verschlechterung im Hinblick auf die Entzinkungsbeständigkeit. Bevorzugt ist, dass der Eisen-Anteil in einem Teilbereich liegt, der nahe der Obergrenze liegt, also beispielsweise in einem Bereich von 0,18 bis 0,20 Gew.-%.

Der Zinngehalt (Sn) erhöht insbesondere in einphasigen (Alpha-) Kupfer-Zink-Legierungen den Korrosionswiderstand (durch Deckschichtbildung) und verbessert insbesondere die Festigkeits- und/oder Gleiteigenschaften. Die Obergrenze von 0,2 Gew.-% wurde festgelegt, weil darüber hinaus keine positiven Effekte auf den Korrosionswiderstand festgestellt werden konnten. Die Untergrenze von 0,0 Gew.-% ist das Ergebnis von Versuchsreihen und der Tatsache, dass je nach Einsatzmaterial nur sehr wenig oder kein Zinn enthalten sein kann.

Der hier vorgeschlagene Mangangehalt verbessert die mechanischen Eigenschaften und die Korrosionsbeständigkeit, insbesondere gegen Witterungseinflüsse bzw. Feuchtigkeit. Die Obergrenze von 0,02 Gew.-% wurde festgelegt, um dann ggf. auftretende Probleme mit Harteinschlüssen zu vermeiden. Die Festlegung erfolgte außerdem auf Grundlage der sich erfahrungsgemäß beim Schmelzen einstellenden Gehalte.

Darüber hinaus können noch Restbestanteile vorgesehen sein, wobei diese konkrete Legierungselemente sowie (unvermeidbare) Verunreinigungen umfassen können. Jeder dieser Restbestandteile ist mit einem Maximalgehalt von jeweils 0,02 Gew.-% erlaubt. Die Summe aller Restbestanteile solle insbesondere den Wert 0,2 Gew.-% nicht überschreiten.

Klar ist, dass die Kupfer-Zink-Legierung mit den hier angegebenen Gehaltsbereichen so zu wählen ist, dass die Summe der Legierungsbestandteile 100 Gew.-% ergibt.

Gemäß einer Weiterbildung wird vorgeschlagen, dass die Kupfer-Zink-Legierung kein Silicium (Si) enthält.

Neben Kostenvorteilen führt dies dazu, dass diese siliziumfreie Legierung nach dem Gebrauch ggf. mit anderen Kupfer-Zink-Legierungen zusammen recycelt werden kann.

Die vorgeschlagene Kupfer-Zink-Legierung findet insbesondere Verwendung bei einer Sanitärarmatur. Insbesondere werden dort Wasser führende Bauteile und/oder Wasser ausgesetzte Bauteile mit einer solchen Kupfer-Zink-Legierung bereitgestellt. Hierbei kann es sich insbesondere um gegossene Bauteile handeln. Beispiele für solche Bauteile sind Gehäusebauteile, Ringe, Hülsen, und dergleichen.

Demgemäß wird auch vorgeschlagen, dass eine Sanitärarmatur, ausweisend ein Gehäusebauteil, das zumindest eine Außenoberfläche bildet oder eine Innenoberfläche für einen Wasserlauf umfasst, so gestaltet ist, dass zumindest die Außenoberfläche oder die Innenoberfläche mit der Kupfer-Zink-Legierung ausgeformt wird. Damit sind hier insbesondere die mit Wasser benetzten und/oder die Wasser führenden Oberflächen des Gehäusebauteils angesprochen. Es ist auch möglich, dass mit der Kupfer-Zink-Legierung sowohl die Außenoberfläche als auch die Innenoberfläche des Gehäusebauteils gebildet wird, bspw. wenn das Gehäusebauteil einstückig gegossen ist. Ungeachtet dessen ist möglich, auf der Außenoberfläche und/oder der Innenoberfläche noch eine Schutzschicht vorzusehen, insbesondere im Hinblick auf die optische Gestaltung und/oder die zusätzliche Verbesserung des Korrosionsschutzes.

Darüber hinaus wird auch ein Verfahren zur Herstellung eines Gussbauteils aus einer Kupfer-Zink-Legierung vorgeschlagen, umfassend wenigstens die folgenden Schritte:
- Bereitstellen einer erfindungsgemäßen Kupfer-Zink-Legierung,
- Erhitzen der Kupfer-Zink-Legierung, so dass diese in flüssiger Form vorliegt,
- Gießen der Kupfer-Zink-Legierung in eine vorgegebene Form,
- Abkühlen der Kupfer-Zink-Legierung, so dass diese erstarrt,
- Erwärmen der erstarrten Kupfer-Zink-Legierung auf eine Temperatur von 430 °C bis 470 °C für eine vorgegebene Haltezeit,
- Abkühlen der Kupfer-Zink-Legierung.

Hiermit ist insbesondere ein Gießverfahren angegeben, wobei das gegossene Bauteil nachträglich noch einer Wärmebehandlung unterzogen wird.

Ganz besonders bevorzugt ist, dass die Haltezeit im Bereich von 40 min bis 70 min liegt, ganz besonders bevorzugt im Bereich von 50 bis 65 min.

Mit der hier vorgeschlagenen Wärmenachbehandlung wird insbesondere eine Gefügeveränderung erreicht, bei der ein Großteil des im Gussteil befindlichen Beta-Messings in entzinkungsbeständiges Alpha-Messing umgewandelt wird.

Zur Veranschaulichung der Erfindung wird nachfolgend ein Beispiel für eine konkrete Kupfer-Zink-Legierung angegeben. Zudem wird als Vergleichsbeispiele die Werkstoffe CuZn21Si3P und MS63 aufgeführt, anhand derer die Unterschiede zu der erfindungsgemäßen Kupfer-Zink-Legierung veranschaulicht werden.

### Ausführungsbeispiel 1:

| | | |
|---|---|---|
| 63,60 Gew.-% Cu; | 35,50 Gew.-% Zn; | 0,177 Gew.-% Pb; |
| 0,382 Gew.-% Al; | 0,128 Gew.-% As; | 0,187 Gew.-% Fe; |
| 0,017 Gew.-% Sn; | 0,001 Gew.-% Mn; | |
| 0,008 Gew.-% Restbestandteile | | |

Das angegebene Beispiel zeichnet sich durch eine sehr gute Entzinkungsbeständigkeit aus, wobei gleichzeitig eine Zusammensetzung vorliegt, die mit anderen Messingbauteilen einfach wiederverwertbar ist.

### Vergleichswerkstoffe:

### CuZn21Si3P:

Diese Legierung hat einen sehr hohen Kupfergehalt (ca.: 76 Gew.-%) und ist daher sehr teuer. Der ebenfalls sehr hohe Siliziumgehalt von ca. 4 Gew.-% führt zu immensen Problemen bei der Vermischung mit herkömmlichen Legierungen, insbesondere besteht die Gefahr von Einschlüssen umfassend Siliziumoxyd. Das Kreislaufmaterial muss also streng getrennt werden und es dürfen nur sortenreine Einsatzstoffe verwandt werden. In der Praxis müssen bei Mischungen von CuZn21Si3P und anderen Materialien in einer Gießerei entweder separate Öfen oder Tiegelöfen mit Wechseleinsätzen verwendet werden.

### MS 63

Dieses Messing hat einen Bleigehalt von bis zu 1,6 Gew.-% und kann daher nicht als bleifreies Messing eingestuft werden.

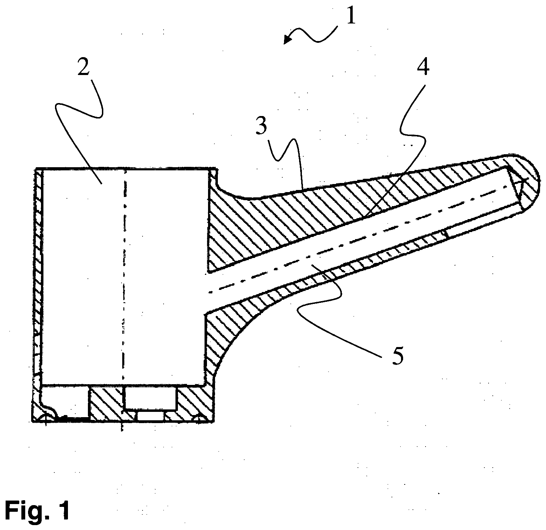

Ein bevorzugter Anwendungsbereich, auf den die Erfindung jedoch nicht beschränkt sein soll, ist in der beiliegenden Fig. 1 veranschaulicht. Die Figur zeigt ein einstückig ausgeformtes Gehäusebauteil 2 für eine Sanitärarmatur. Das Gehäusebauteil 2 bildet dabei eine Außenoberfläche 3 aus, die bspw. vom Bediener sichtbar ist. Zudem bildet das Gehäusebauteil 2 eine Innenoberfläche 4 aus, mit der der Wasserlauf 5 gebildet ist. Ganz besonders bevorzugt handelt es sich bei dem Gehäusebauteil 2 um ein Gussbauteil aus der erfindungsgemäßen Kupfer-Zink-Legierung.

Die Kupfer-Zink-Legierung sowie damit hergestellte Bauteile erlauben eine besonders umweltfreundliche und kostengünstige Bereitstellung von Sanitärarmaturen.

### Bezugszeichenliste

- 1: Sanitärarmatur
- 2: Gehäusebauteil
- 3: Außenoberfläche
- 4: Innenoberfläche
- 5: Wasserlauf

## Patentansprüche

1. Kupfer-Zink-Legierung bestehend aus:
- 63,5 bis 63,8 Gew.-% Cu,
- 35,2 bis 35,6 Gew.-% Zn,
- 0,17 bis 0,20 Gew.-% Pb,
- 0,32 bis 0,40 Gew.-% Al,
- 0,11 bis 0,13 Gew.- % As,
- 0,16 bis 0,20 Gew.-% Fe,
- 0,0 bis 0,20 Gew.-% Sn,
- 0,0 bis 0,02 Gew.-% Mn,
sowie Restbestandteile bis maximal je 0,02 %.

2. Kupfer-Zink-Legierung nach Patentanspruch 1, wobei kein Si enthalten ist.

3. Verwendung einer Kupfer-Zink-Legierung gemäß einem der vorherstehenden Patentansprüche für eine Sanitärarmatur (1).

4. Sanitärarmatur (1), ausweisend ein Gehäusebauteil (2), das zumindest eine Außenoberfläche (3) bildet oder eine Innenoberfläche (4) für einen Wasserlauf (5) umfasst, wobei zumindest die Außenoberfläche (3) oder die Innenoberfläche (4) mit der Kupfer-Zink-Legierung gemäß Patentanspruch 1 oder 2 ausgeführt ist.

5. Verfahren zur Herstellung eines Gussbauteils aus einer Kupfer-Zink-Legierung, umfassend wenigstens die folgenden Schritte:
- Bereitstellen einer Kupfer-Zink-Legierung gemäß Patentanspruch 1 oder 2,
- Erhitzen der Kupfer-Zink-Legierung, so dass diese in flüssiger Form vorliegt,
- Gießen der Kupfer-Zink-Legierung in eine vorgegebene Form,
- Abkühlen der Kupfer-Zink-Legierung, so dass diese erstarrt,
- Erwärmen der erstarrten Kupfer-Zink-Legierung auf eine Temperatur von 430 °C bis 470°C für eine vorgegebene Haltezeit,
- Abkühlen der Kupfer-Zink-Legierung.

6. Verfahren nach Patentanspruch 5, bei der die Haltezeit im Bereich von 40 min bis 70 min liegt.

## Claims

1. Copper/zinc alloy consisting of:
- 63.5 to 63.8 % by weight Cu,
- 35.2 to 35.6 % by weight Zn,
- 0.17 to 0.20 % by weight Pb,
- 0.32 to 0.40 % by weight Al,
- 0.11 to 0.13 % by weight As,
- 0.16 to 0.20 % by weight Fe,
- 0.0 to 0.20 % by weight Sn,
- 0.0 to 0.02 % by weight Mn,
and remaining constituents up to a maximum of 0.02 % in each case.

2. Copper/zinc alloy according to patent claim 1, wherein no Si is present.

3. Use of a copper/zinc alloy according to either one of the preceding patent claims for a sanitary fitting (1).

4. Sanitary fitting (1), having a housing component (2) which forms at least one outer surface (3) or comprises an inner surface (4) for a water conduit (5), wherein at least the outer surface (3) or the inner surface (4) is realised with the copper/zinc alloy according to patent claim 1 or 2.

5. Method of producing a cast component from a copper/zinc alloy, comprising at least the following steps:
- providing a copper/zinc alloy according to patent claim 1 or 2,
- heating the copper/zinc alloy so that it is present in liquid form,
- casting the copper/zinc alloy into a specified shape,
- cooling the copper/zinc alloy so that it solidifies,
- heating the solidified copper/zinc alloy at a temperature of from 430°C to 470°C for a specified dwell time,
- cooling the copper/zinc alloy.

6. Method according to patent claim 5, wherein the dwell time is in the range of from 40 min to 70 min.

## Revendications

1. Alliage cuivre-zinc constituée de :
- 63,5 à 63,8 % en poids de Cu,
- 35,2 à 35,6 % en poids de Zn,
- 0,17 à 0,20 % en poids de Pb,
- 0,32 à 0,40 % en poids d'Al,
- 0,11 à 0,13 % en poids d'As,
- 0,16 à 0,20 % en poids de Fe,
- 0,0 à 0,20 % en poids de Sn,
- 0,0 à 0,02 % en poids de Mn,
ainsi que des impuretés à raison d'au maximum 0,02 % à chaque fois.

2. Alliage cuivre-zinc conforme à la revendication 1,
ne renfermant pas de Si.

3. Utilisation d'un alliage cuivre-zinc conforme à l'une des revendications précédentes, pour une robinetterie sanitaire (1).

4. Robinetterie sanitaire (1) comprenant un élément de carter (2) qui forme au moins une surface externe (3) ou renferme une surface interne (4) permettant l'écoulement d'eau (5), la surface interne (3) et/ou la surface externe (4) étant réalisée(s) en un alliage cuivre-zinc conforme à la revendication 1 ou 2.

5. Procédé de fabrication d'un élément coulé en un alliage cuivre-zinc comprenant au moins les étapes suivantes consistant à :
- préparer un alliage cuivre-zinc conforme à la revendication 1 ou 2,
- chauffer l'alliage cuivre-zinc de sorte qu'il se présente sous forme liquide,
- couler l'alliage cuivre-zinc selon une forme prédéfinie,
- refroidir l'alliage cuivre-zinc de sorte qu'il se solidifie,
- chauffer l'alliage cuivre-zinc durci à une température située dans la plage de 430°C à 470°C pendant un temps de maintien en température prédéfini,
- refroidir l'alliage cuivre-zinc.

6. Procédé conforme à la revendication 5,
dans lequel la durée de maintien en température est située dans la plage de 40 minutes à 70 minutes.
